Europäisches Patentamt

European Patent Office

Office européen des brevets

(11) Veröffentlichungsnummer: **0 144 863 B1**

(12) **EUROPÄISCHE PATENTSCHRIFT**

(45) Veröffentlichungstag der Patentschrift: **22.01.92**

(21) Anmeldenummer: **84114092.4**

(22) Anmeldetag: **22.11.84**

(51) Int. Cl.5: **A01K 47/04**, A01K 49/00

(54) **Kunststoffbienenwabe und Verfahren zum Züchten von leistungsfähigeren und widerstandsfähigeren Bienen.**

(30) Priorität: **24.11.83 DE 3342485**

(43) Veröffentlichungstag der Anmeldung:
**19.06.85 Patentblatt 85/25**

(45) Bekanntmachung des Hinweises auf die
Patenterteilung:
**22.01.92 Patentblatt 92/04**

(84) Benannte Vertragsstaaten:
**AT BE CH FR GB IT LI NL SE**

(56) Entgegenhaltungen:
**CH-A- 524 308
DE-A- 2 611 932
DE-A- 2 612 319
DE-A- 3 229 181**

(73) Patentinhaber: **hk Vertriebsgesellschaft mbH
Postfach 545
W-7320 Göppingen(DE)**

(72) Erfinder: **Schmidt, Matthias
Dachsbaustrasse 9
W-6950 Mosbach-Wallstadt(DE)**

(74) Vertreter: **Wasmeier, Alfons, Dipl.-Ing. et al
Patentanwälte Wasmeier & Graf Postfach 10
08 26
W-8400 Regensburg1(DE)**

Rank Xerox (UK) Business Services

## Beschreibung

Die Erfindung betrifft eine mehrteilige Kunststoffbienenwabe nach dem Oberbegriff des Anspruches 1.

Kunststoffbienenwaben sind als einstückig gegossene Waben bekannt. Sie haben geringe Stabilität und sind nicht wirtschaftlich herstellbar.

Ferner sind im Spritzgießverfahren hergestellte Kunststoffwaben bekannt. Bei voller Höhe der Zellenwände ist ihre Herstellung aufwendig. Deshalb wurden gespritzte Kunststoffwaben hergestellt ( DE-PS 21 18 676), die eine verringerte Höhe der Zellenwände (ca. 1/3 der vollen Höhe der Wabenwände) haben. Auch hier ist der Aufwand hoch und es ist notwendig, die Zellenwände vom Boden nach außen sich verjüngend auszubilden.

Des weiteren ist aus der CH-A- 524 308 eine Kunststoffbienenwabe bekannt, die aus einer Mittelwand und von der Mittelwand beidseitig ausgehenden Zellenwänden mit voller oder reduzierter Höhe der Zellenwände besteht. Die Zellenwände sind in Vertiefungen der Mittelwand eingesetzt. Die Mittelwand selbst hat einen zick-zack- bzw. wellenförmigen Querschnitt mit Erhebungen und Vertiefungen. An den Scheitelpunkten der Erhebungen und Vertiefungen ist jeweils eine Aussparung zur Aufnahme der Zellenwände vorgesehen. Damit ist zwischen jeweils zwei benachbarten Zellenwänden der Boden der Zellenwand zur Mitte zu vertieft ausgebildet. Die Zellen zu beiden Seiten der Mittelwand sind aufgrund der vorgegebenen Form der Mittelwand um eine halbe Zelle gegeneinander versetzt angeordnet. Die Zellenwände verlaufen im rechten Winkel zur Ebene der Mittelwand, sie haben durchgehend gleiche Dicke und bilden die Seitenwände einer Zelle mit durchgehend konstantem Querschnitt.

Des weiteren ist aus der DE-OS 26 12 319 eine aus Kunststoff, Metall oder dergl. festem Material bestehende Honigwabe bzw. Vorrichtung zum Gewinnen von Honig in ungeschleudertem Zustand bekannt. Eine solche bekannte Wabe besteht aus einer Mittelwand, von beiden Seiten der Mittelwand ausgehenden Zwischenwänden, sowie die Mittelwände nach außen abschließenden Außenplatten. Die Kammern haben durchgehend kreisförmigen Querschnitt, wobei der Durchmesser von innen nach außen abnimmt. Diese Kammern bilden keine Zellen und sind nicht unmittelbar aneinander anschließend angeordnet, sondern jeweils durch geschlossene Räume voneinander getrennt, so daß die für die Honiggewinnung vorgesehenen Kammern nur einen Teil des Gesamtvolumens einnehmen. Die Zwischenwände haben hierbei von innen nach außen verlaufend gleiche Wandstärke. Jede der Kammern, die die Form eines Kegelstumpfes mit kreisförmigem Querschnitt haben, ist durch Gebilde begrenzt, die in sich geschlossene Leerkammern darstellen und die durch Zwischenwände begrenzt sind. Die konische Ausgestaltung der Honigkammern und die umgekehrt konische Ausgestaltung der Zwischenräume zwischen benachbarten Kammern dient ausschließlich dem Zweck, den Spritzvorgang bzw. das Entfernen der Kerne beim Spritzvorgang zweckmäßig durchführen zu können, und hat auf die Funktion der Honigwabe selbst keinen Einfluß. Die Tiefe der Kammern ist dabei wesentlich größer als die Tiefe normaler Zellen; dies ist für die Honiggewinnung mit derartigen Waben ausschlaggebend, damit die Bienenkönigin daran gehindert wird, in diese Kammern Eier zu legen.

Unabhängig von der Herstellung derartiger Kunststoffwaben besteht das Problem, die Varroa-Milbe zu bekämpfen, die den Fortbestand der Bienen bedroht. Dies geschieht bisher mit chemischen Mitteln, gegen die die Milben resistent werden, und die den Honig vergiften. Die in den Zellen von der Varroa-Milbe befallenen Bienen sind stark geschwächt und anfällig gegen andere Bienenkrankheiten.

Eine wirksame Bekämpfung der Varroa-Milbe ist nur möglich, wenn die Widerstandsfähigkeit der heranwachsenden Bienen verbessert wird. Dies erfordert, daß Maden und heranwachsende Bienen optimal ernährt werden. Eine optimale Ernährung von Maden und Jungbienen mit Futtersaft in den Zellen ist gegeben, wenn stets ausreichend Futtersaft vorhanden ist. Der Futtersaft in den Zellen ist in Kunststoffwaben wesentlich haltbarer als in natürlichen Wachswaben.

Aufgabe der Erfindung ist es, Spritzgußkunststoffwaben der gattungsgemäßen Art (mit voller Höhe der Zellenwände) zu schaffen, die im Bodenbereich der Zelle ein möglichst großes Volumen für die Aufnahme des Futtersaftes und der Maden besitzen. Derartige Waben sollen wirtschaftlich und einfach gefertigt und zusammengebaut werden können, möglichst geringes Gewicht haben und kostengünstig sein. Ferner soll die Form der Zellen so sein, daß die Maden sich optimal entwickeln und daß insbes. die Larven sich sowohl früher verdeckeln als auch früher schlüpfen als dies bei normalen Zellen und unter normalen Lebensbedingungen der Fall ist. Des weiteren ist Aufgabe der Erfindung, ein Verfahren zum biologischen Bekämpfen der Varroa-Milbe unter Verwendung derartiger mehrteiliger Kunststoffzellen zu schaffen.

Gemäß der Erfindung wird dies mit den Merkmalen des Kennzeichens des Anspruches 1 erzielt. Weitere Ausgestaltungen der Erfindung sind Gegenstand der Unteransprüche.

Mit der erfindungsgemäßen Kunststoffwabe wird erreicht, daß die Zellenräume beidseitig der Mittelwand mit vom Boden nach außen abnehmendem Durchmesser hergestellt werden können. Sowohl die Mittelwand als auch die Zellenwände zu beiden Seiten der Mittelwand sind symmetrisch ausgebildet. Die Zellenwände können einstückig beliebig verjüngt hergestellt werden, aber auch in der Höhe unterteilt sein, wobei dann eine die gesamte Wabe umschließende Spannvorrichtung erforderlich ist.

Die Verbreiterung der Zellenwände vom in der Mittelwand ausgebildeten Zellenboden aus nach außen ist zweckmäßigerweise so gewält, daß der Durchmesser der Zelle am Boden etwa 7 mm und am offenen äußeren Ende etwa 5,4 mm beträgt. Der größere Durchmesser des Zellenbodens ergibt eine große Fläche des Zellenbodens und des darüberliegenden Zellenraumes für die Aufnahme einer größeren Menge Futtersaftes und damit für die optimale Ernährung der Maden und der Jüngbienen. Mehr Futtersaft bedeutet für die Made bessere Ernährung; sie führt zu gesünderen und widerstandsfähigeren Maden und Jungbienen. Diese Maden und Jungbienen benötigen einen größeren Raum als kleinere, schwächere Tiere. Da die Öffnungsweite derartiger Zellen am freien Eintrittsende dem normalen Zellendurchmesser entspricht, nehmen sowohl die Futterbienen als die Königin derartige Zellen als natürliche Zellen an.

Die gespritzten Zellenwände zu beiden Seiten der Mittelwand sind lösbar miteinander befestigt, um von den Zellenwänden die Häutchen, die beim Schlüfen der Maden gebildet werden, entfernen und die Kunststoffwabe reinigen zu können. Die Verbindung zwischen Zellenwänden und Mittelwand erfolgt z.B. mittels Steck- oder Schraubverbindungen, Rastelementen u.a. bzw. mittels rahmenförmiger Verspannungsvorrichtung.

Mit den vorgeschlagenen mehrteiligen Kunststoffbienenwaben werden für die Maden im Bodenbereich der Zellen optimale Lebensbedingungen geschaffen, indem ein möglichst großer Raum zur Aufnahme des Futtersaftes geschaffen wird, während die Verjüngung der Zellenwand nach außen das Schlüpfen der Jungbienen erleichtert und der Materialaufwand sowie das Gewicht für die Waben gesenkt wird. Ferner lassen sich innerhalb einer gegebenen Fläche mehr Zellen unterbringen als bei bekannten Ausgestaltungen. Insbesondere wird aufgrund der verbesserten Lebensbedingungen erreicht, daß die Bienenlarven bis zur Verdeckelung nur 4 (bisher 6) Tage, und bis zum Schlüfen der Maden nur 10 (bisher 12) Tage benötigen. Die Entwicklungszeit der Bienen beträgt mit der Kunststoffwaben nach der Erfindung 17 - 18 Tage, mit normalen Kunststoff-oder Wachswaben 21 Tage. Dies hat eine außerordentliche Bedeutung für die erfolgreiche Bekämpfung der Varroa-Milbe, da diese Milben im Rhythmus der Bienenentwicklung Eier legen und schlüpfen. Aufgrund der Verkürzung des Zeitaufwandes für das Verdeckeln der Bienenlarven und für das Schlüfen der Bienen wird eine Vermehrung der Varroa-Milbe wegen fehlender Paarung unterbunden.

Praktische Versuche haben ergeben, daß aufgrund der Ausgestaltung der erfindungsgemäßen Bienenwaben die Königinnenfuttersaft erzeugenden Bienen den speziell für die Ernährung der Königin bestimmten Futtersaft an alle Bienen geben. Dieser Königinnenfuttersaft besonders hoher Qualität bewirkt, daß die Bienen sich schneller entwickeln und länger leben, daß stärkere Völker erzielt werden, daß der Honigertrag um ein Mehrfches gesteigert werden kann, und daß insbes. verhindert wird, daß die Bienen in Scharmstimmung gelangen, so daß das Schwärmen der Bienen unterbunden wird, was für den Bienenzüchter einen revolutionären Fortschritt und eine wichtige Zeiteinsparung bedeutet.

Nachstehend wird die Erfindung in Verbindung mit der Zeichnung anhand von Ausführungsbeispielen erläutert. Es zeigt:

Fig. 1    eine Teilschnittansicht einer Kunststoffbienenwabe nach der Erfindung,

Fig. 2    eine Aufsicht auf die Wabe nach Fig. 1,

Fig. 3    in vergrößertem Maßstab einen Ausschnitt aus der Darstellung nach Fig. 1,

Fig. 4    eine schematische Darstellung eines Spannrahmens für eine Wabe nach Fig. 1,

Fig. 5    eine weitere Ausführungsform einer Kunststoffbienenwabe nach der Erfindung mit Schnitt durch Mittelwand und Zellenwände für eine Kunststoffwabe mit Arbeiterinnenzelle,

Fig. 6    eine entsprechende Schnittdarstellung der gleichen Mittelwand mit Zellenwänden von Königinnenzellen,

Fig. 7    eine Schnittdarstellung durch eine andere Ausführungsform einer mehrteiligen Kunststoffbienenwabe nach der Erfindung, und

Fig. 8    eine Detaildarstellung des Ausganges einer Bienenzelle in vergrößertem Maßstab.

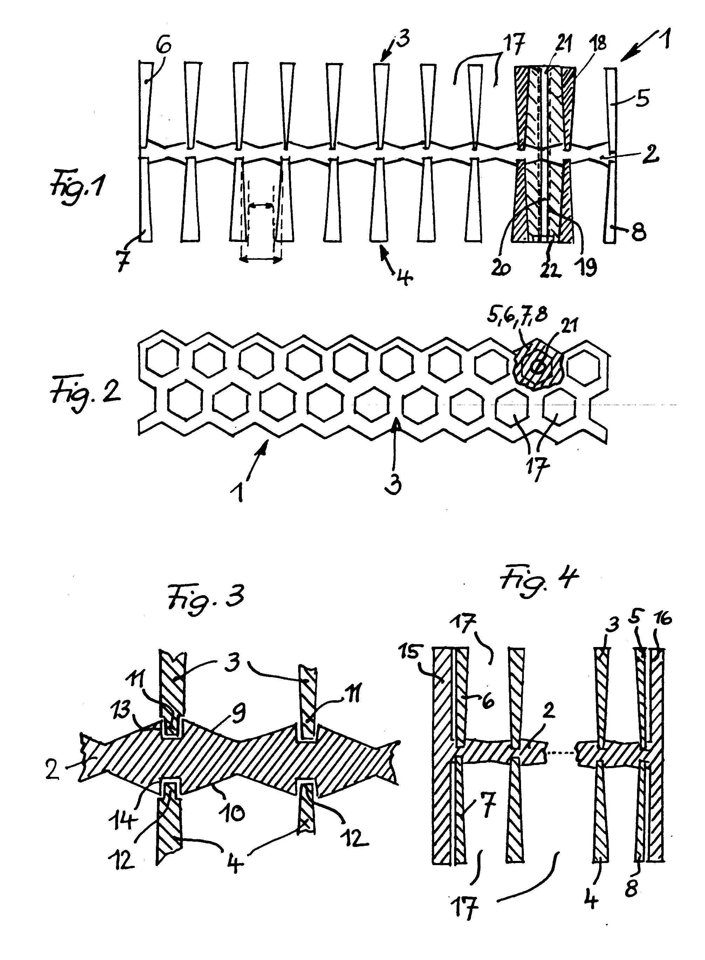

Die Kunststoffbienenwabe 1 (Fig. 1) besteht aus einer Mittelwand 2 sowie den beidseitig der Mittelwand 2 anschließenden Zellenwänden 3 und 4. Die einzelnen Zellenwände 3 und 4 haben eine sich von der Mittelwand 2 nach oben erweiternde Form, die einzelnen Zellen haben am Boden einen größeren Durchmesser als am offenen Ende. Die Zunahme der Wanddicke der Wände 3 und 4 von innen nach außen ist vorzugsweise kontinuierlich und linear. Die äußersten Zellenwände 5, 6, 7 und 8 sind außen eben. Die Mittelwand 2 ist beidseitig der Zellenwände 3 und 4 symmetrisch ausgebildet, so daß die Zellenböden 9, 10, die sich symmetrisch zur Mitte zu vertiefen, einander gegenüberliegend angeordnet sind. Die Zellenwände 3, 4 sind mit Zapfen 11, 12 in Vertiefungen 13, 14 der Mittelwand eingesetzt. Die Zapfen 11, 12 können in den Vertiefungen 13, 14 z.B. gesteckt, verklebt, einrastend, oder auch lose anliegend angeordnet sein. Entscheidend ist, daß die Verbindung lösbar ist, damit die Mittelwand 2 mit den Zellenwänden 3, 4 zusammengebaut und wieder zerlegt werden kann.

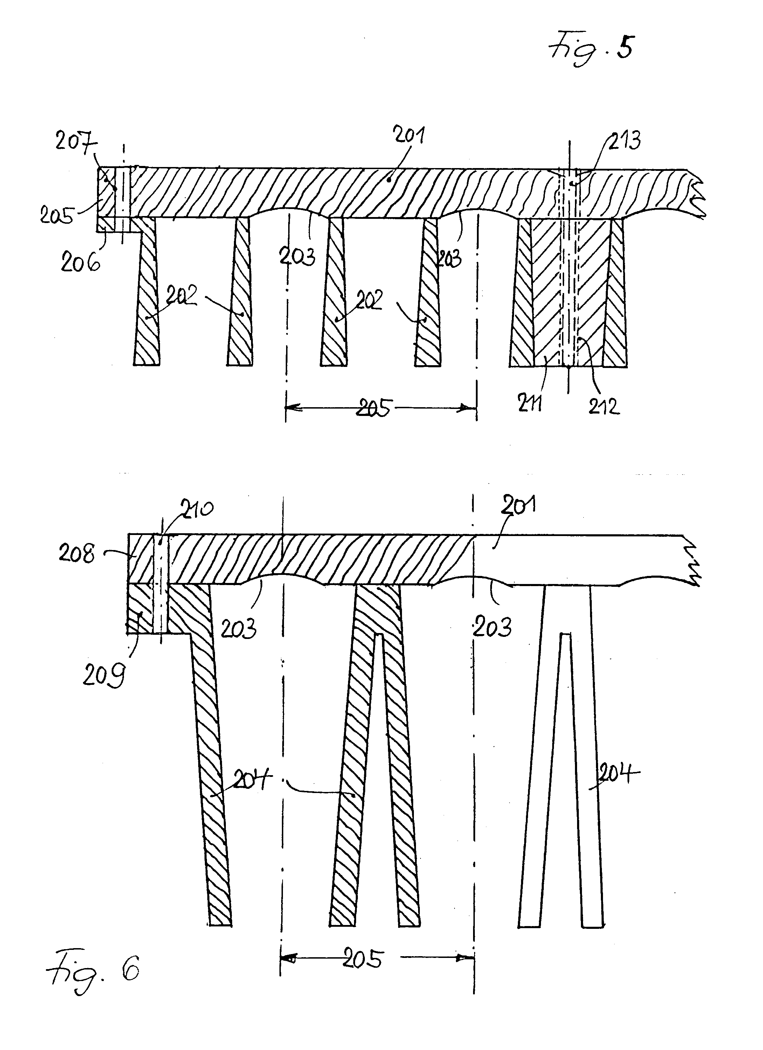

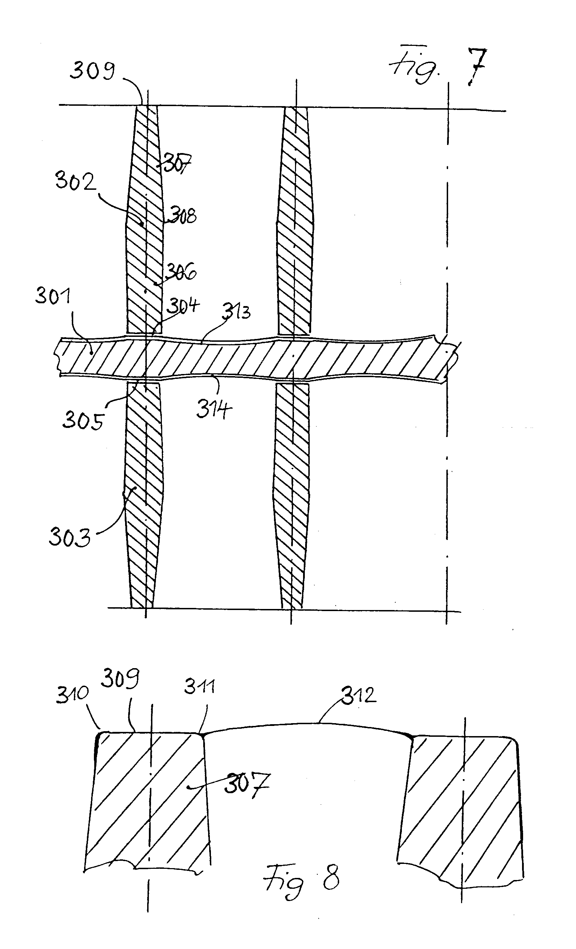

Fig. 4 zeigt, wie die Zellenwände 3 und 4 in Verbindung mit der Mittelwand 2 verspannt werden. Hierzu ist die Mittelwand 2 mit Endhalterungen 15, 16 versehen, die mit den Außenflächen der Wände 5, 6, 7, 8 in Eingriff kommen. Die Verbindung der Spannteile 15, 16 mit der Mittelwand 2 ist entweder einstückig oder indem die Spannteile 15 und 16 mit der Mittelwand 2 verschraubt, verklebt oder dgl. befestigt sind. Die Verbindung der Halterungen 15, 16 mit der Wabe 1 kann so sein,daß die Halterungen einfache Platten 15, 16 sind, die Bohrungen aufweisen, durch die hindurch eine Verschraubung mit der Mittelwand 2 erfolgt. Vorzugsweise beträgt der Durchmesser der einzelnen Zellen 17 im Bodenbereich der Zelle ca. 7 mm und am entgegengesetzten, offenen Ende etwa 5,4 mm (= Innendurchmesser einer herkömmlichen Zelle).

Eine Form der Verbindung der Zellenwände 3 und 4 miteinander bzw. mit der Mittelwand 2 ist in Fig. 1 schraffiert dargestellt. Eine obere und eine untere Zelle der Abschnitte 3 und 4 ist an mehreren Stellen massiv gespritzt. Durch diese massiven Zellen und die Mittelwand 2 sind Bohrungen 18, 19 gebohrt, die Schrauben 20 mit versenktem Schraubenkopf 21 und Schraubenmutter 22 aufnehmen. Die Zellenwände 3 und 4 können stumpf auf der Mittelwand aufsitzen.

Diese Kunststoffbienenwabe kann als Drohnenwabe ausgestaltet werden. Von den normalen Bienenwaben getrennte Drohnenwaben haben den Vorteil, daß die Bienenkönigin ihre Drohneneier nicht mehr in die für die Arbeiterinnen bestimmten Zellen legt, sondern ausschließlich in die Zellen der Drohnenwaben, die als Einheit in gute und starke Bienenvölker eingesetzt werden. Da die Arbeiterinnenzellen der Kunststoffwabe nach der Erfindung einen Durchmesser der freien Öffnung von der Größe einer Normalzelle (etwa 5,4 mm) haben, legt die Königin keine Drohneneier in diese scheinbar für Drohnen zu engen Zellen.

Zu Fig. 5 ist 201 die Kunststoff-Mittelwand, mit der die Zellenwände 202 auf ihrer Unterseite verbunden sind. Sie weisen konkave Ausnehmungen 203 auf, die die Bodenfläche der Arbeiterinnenzellen darstellen und deren Durchmesser dem Abstand der Zellenwände 202 einer Zelle am Übergang der Zellenwände in die Mittelwand 201 entsprechen. Die Zellenwände 202 sind von der Mittelwand lösbar und werden, nachdem die Königin Eier in die durch die Zellenwände 202, 202 und die Mittelwand 201 gebildeten Arbeiterinnenzellen gelegt hat und nachdem aus den Eiern die Maden geschlüpft sind, von der Mittelwand 201 entfernt und durch die größeren Zellenwände 204 der Königinnenzellen ersetzt. Zellenwände 202 und Zellenwände 204 bilden für die gesamte Königinnenzuchtwabe eine integrale Einheit. Die konvexen Vertiefungen 203, 203 haben voneinander einen Abstand 205 gleich dem doppelten Durchmesser einer Arbeiterinnenzelle und dem einfachen Durchmesser einer Königinnenzelle. Bei der durch Mittelwand 201 und Zellenwände 204 gebildeten Königinnenzelle nimmt die Vertiefung 203 nur einen Teil des gesamten Zellenbodens ein. Sowohl Zellenwände 202 als Zellenwände 204 werden von der Mittelwand 201 nach außen dicker, so daß Arbeiterinnenzellen und Königinnenzellen einen Zellenraum erhalten, dessen Durchmesser vom Boden nach außen abnimmt. Damit steht im Bereich der Vertiefung 203 ein vergrößerter Raum für die Aufnahme des Futtersaftes und der Made zur Verfügung, was günstig für Ernährung und Wachstum der Made ist. Mittelwand 201 und Zellenwände 202 bzw. 204 bestehen aus gespritztem Kunststoff. Zellenwände 202 bzw. 204 und Mittelwand sind miteinander verschraubt oder gesteckt. In Fig. 5 zeigt 205 einen Randbereich der Mittelwand 201, während 206 einen flanschartigen Ansatz der Seitenwände 202 bezeichnet. Beide Ansätze 205 und 206 liegen aufeinander und weisen durchgehende Bohrungen 207 auf, durch die Schraubverbindungen gesteckt sind, die beide Teile zusammenhalten. Entsprechend Fig. 6 hat die Mittelwand einen Randteil 208, dem ein flanschartiger Randansatz 209 der Seitenwände 204 so zugeordnet ist, daß beide kongruente Bohrungen 210 für Befestigungsschrauben oder Stifte aufweisen. Die beiden Randteile 205, 206 bzw. 208, 209 können jedoch auch durch Klammern oder dgl. miteinander lösbar befestigt sein. Zusätzlich oder alternativ können nach Fig. 5 einige Zellenräume mit Kunststoffmaterial 211 ausgegossen sein; Mittelwand und Zellenwände sind mittels Bohrung 212 und Schraube 213 oder Rastverbindung lösbar miteinander verbunden.

Nach Fig. 7 sind beidseits der Mittelwand 301 Seitenwände 302 und 303 der Bienenzellen angeordnet, die lose bei 304, 305 an der Oberseite der Mittelwand 301 anliegen. Die Wände 302 und 303 bestehen aus einem inneren Abschnitt 306 und einem äußeren Abschnitt 307; der innere Abschnitt erweitert sich von der Mittelwand 301 leicht nach außen bis zu einer Stelle 308 und geht in den äußeren Abschnitt 307 über, der sich nach außen bis zur Stirnseite 309 stärker verjüngt als der Abschnitt 306 sich erweitert. Die Ränder 310 und 311 sind gerundet und sind nach Fig. 8 von einem Häutchen 312 überspannt. Da die Bienenlarven zum Schlüpfen das Häutchen durchbrechen müssen, haben sie damit einen besseren Zugang zum Rand des Häutchens an der Verbindungsstelle mit der Zellenwand. Die Mittelwand 301 ist z.B. mit einer Schicht 313 aus Wachs überzogen, insbesondere an den Vertiefungen 314, die den Zellenboden bilden.

**Patentansprüche**

1. Mehrteilige Kunststoffbienenwabe zum Züchten von leistungsfähigeren und widerstandsfähigeren Bienen, mit einer Mittelwand (2) und von der Mittelwand (2) beidseitig ausgehenden Zellenwänden (3, 4) mit voller Höhe der Zellenwände, wobei die Zellen eine sechseckige Querschnittsform haben, am offenen Ende einen Durchmesser von etwa 5,4 mm aufweisen und die Zellenwände (3, 4) mit der Mittelwand (2) lösbar verbunden sind, und die freien Stirnseiten der Zellenwände, die parallel zur Mittenebene der Mittelwand verlaufen, in ihrer Gesamtheit die Außenseite der Wabe bilden, **dadurch gekennzeichnet,** daß die Zellen sich von der Mittelwand (2) nach außen konisch verjüngen, daß die Kunststoffbienenwabe (1) zusätzlich zur Mittelwand (2), aus den konisch verlaufenden Zellenwänden (3, 4) sowie Verbindungsmitteln (20, 22, 15, 16) zum Verbinden von Mittelwand (2) und konisch verlaufenden Zellenwänden (3, 4) besteht, und daß die Zellenwände (3, 4) von der Mittelwand (2) nach außen verlaufend zunehmend mit größerer Wandstärke ausgebildet sind.

2. Kunststoffbienenwabe nach Anspruch 1, dadurch gekennzeichnet, daß die Zellenwände (3, 4) mit der Mittelwand (2) durch Steck-, Schraub- oder Verbindungsmittel lösbar verbunden sind, und daß die Mittelwand (2) Vertiefungen (12, 13) und die Zellenwände (3, 4) in die Vertiefungen passende Zapfen (11, 12) besitzen.

3. Kunststoffbienenwabe nach Anspruch 1, dadurch gekennzeichnet, daß die Mittelwand (2) Zapfen und die Zellenwände (3, 4) die Zapfen aufnehmende Vertiefungen besitzen.

4. Kunststoffbienenwabe nach Anspruch 1 oder 2, dadurch gekennzeichnet, daß die Zellenböden (9, 10) von den Wänden (3, 4) zur Mitte hin kontinuierlich vertieft sind, derart, daß der Querschnitt teilkreisförmig oder stumpfkegelig ist.

5. Kunststoffbienenwabe nach einem der Ansprüche 1 - 4, dadurch gekennzeichnet, daß bestimmte Zellen eines jeden Zellenwandabschnittes (3, 4) zumindest teilweise als massive Teile gespritzt sind, daß in diesen massiven Teilen Bohrungen (18, 21) angebracht sind, und daß durch diese und entsprechend fluchtende Bohrungen in der Mittelwand (2) hindurch die entgegengesetzten Zellenwandabschnitte (3, 4) miteinander durch Verschrauben (20, 21, 22) verbunden und festgelegt sind.

6. Kunststoffbienenwabe nach einem der Ansprüche 1 - 5, dadurch gekennzeichnet, daß die Zellenwände (302, 303) mit ihrer Stirnwand (304) bündig und stumpf an der Mittelwand (301) lose anliegen, derart, daß keine Verbindung zwischen Mittelwand und Zellenwänden vorhanden ist, daß die Zellenwände zu beiden Seiten der Mittelwand als Ganzes an bestimmten Zellen mit der Mittelwand befestigt sind, und daß die Zellenwände aus zwei Abschnitten (306, 307) bestehen, die einstückig ausgebildet, z. B. gespritzt, sind, von denen der der Mittelwand benachbarte Abschnitt (306) sich vom Zellenboden (314) nach außen konisch leicht erweitert und der äußere Abschnitt (307) sich nach außen konisch stärker verjüngt.

**Claims**

1. Multipart plastic beecomb for breeding highly productive and more resistent bees, comprising a center wall (2) and cell walls (3, 4) at both sides thereof with full height of the cell walls, whereby the cells are of hexagonal cross-section, the open end has a diameter of about 5,4 mm, and the cell walls (3, 4) are releasably connected with the center wall (2), and whereby the free faces of the cell walls which extend parallel to the center plane of the center wall in their entirety form the outer side of the beecomb, **characterised in** that the cells taper conically from the center wall (2) outwardly, that the plastic beecomb (1) in addition to the center wall (2) is provided with conically extending cell walls (3, 4) and connecting elements (20, 22, 15, 16) for connecting the center wall (2) and the conically extending cell walls (3, 4), and that the cell walls (3, 4) are formed with a larger wall thickness increasing from the center wall (2) outwardly.

2. Plastic beecomb according to claim 1, characterised in that the cell walls (3, 4) are releasably connected with the center wall (2) by inserting, screwing or the like connecting means, and that the center walls (2) comprise depressions (12, 13) and the cell walls (3, 4) comprise lugs (11, 12) fitting into said depressions.

3. Plastic beecomb according to claim 1, characterised in that the center wall (2) comprises lugs and the cell walls (3, 4) comprise depressions for receiving said lugs.

4. Plastic beecomb according to claim 1 or 2, characterised in that the cell bottom walls (9, 10) are continuously hollowed from the walls (3, 4) towards the center in such a manner that the cross-section is part-circular or frustum-conical.

5. Plastic beecomb according to one of claims 1 - 4, characterised in that predetermined cells of each cell wall section (3, 4) at least partly are injection-moulded as solid parts, that these solid parts are provided with bores (18, 21), and that through these bores and correspondingly aligned bores within the center wall (2) the opposite cell wall sections (3, 4) are connected and locked with each other by means of screws (20, 21, 22).

6. Plastic beecomb according to one of claims 1 - 5, characterised in that the cell walls (302, 303) with their front wall are in loose, flush and butt contact with the centre wall (301) in such a manner that no fixed connection is provided between the center wall and the cell walls, that the cell walls at both sides of the center wall are fastened as a unit with the center wall at predetermined cells, and that the cell walls comprise two sections (306, 307), which are formed as a unit, f.e. are extruded, whereby section (306) adjacent to the center wall slightly widens outwardly from the cell bottom wall (314) and the outer section (307) tapers outwardly with a higher rate.

**Revendications**

1. Rayon en plastique à plusieurs parties pour élever des abeilles plus productives et résistantes, avec une paroi médiane (2) et des parois d'alvéoles ou de cellules (3, 4) partant des deux côtés de la paroi médiane (2) ayant la pleine hauteur des parois des cellules, les cellules ayant une section de forme hexagonale, présentant à l'extrémité ouverte un diamètre d'environ 5,4 mm et les parois de cellules (3, 4) étant assemblées de manière amovible à la paroi médiane (2) et les côtés frontaux libres des parois des cellules qui sont disposés parallèlement au plan médian de la paroi médiane formant dans leur totalité le côté extérieur du rayon
caractérisé en ce que
les cellules se rétrécissent coniquement en allant de la paroi médiane (2) vers l'extérieur, le rayon en plastique (1) est constitué, outre la paroi médiane (2), des parois des cellules (3, 4) à agencement conique ainsi que de moyens de fixation (20, 22, 15, 16) pour l'assemblage de la paroi médiane (2) et des parois des cellules (3, 4) à agencement conique et les parois des cellules (3, 4) sont réalisées avec une épaisseur de paroi qui croît en allant de la paroi médiane vers l'extérieur.

2. Rayon en plastique selon la revendication 1 caractérisé en ce que les parois des cellules (3, 4) sont assemblées de manière amovible à la paroi médiane (2) par des moyens à enfichage, à vissage ou de liaison et la paroi médiane (2) comporte des évidements (12, 13) et les parois des cellules (3, 4) possèdent des tenons s'adaptant dans ces évidements.

3. Rayon en plastique selon la revendication 1 caractérisé en ce que la paroi médiane (2) comporte des tenons et les parois des cellules (3, 4) possèdent des évidements recevant les tenons.

4. Rayon en plastique selon la revendication 1 ou 2 caractérisé en ce que les fonds des cellules (9, 10) sont évidés avec une augmentation continue de la profondeur en allant des parois (3, 4) au centre de telle manière que la section est en forme d'arc ou tronconique.

5. Rayon en plastique selon l'une des revendications 1 à 4 caractérisé en ce que des cellules déterminées de chacune des parties de parois de cellule (3, 4) sont au moins partiellement obtenue par injections sous forme de pièces massives, des alésages (18, 21) sont réalisés dans ces pièces massives et grâce à ceux-ci et à des alésages alignés correspondants dans la paroi médiane (2) les parties de parois de cellule opposées (3, 4) sont assemblées ensemble et fixées par vissage (20, 21, 22).

6. Rayon en plastique selon l'une des revendications 1 à 5 caractérisé en ce que les parois des cellules (302, 303) prennent appui par leur face frontale librement avec leur surface en bout sur la paroi médiane (301) de manière telle qu'il n'existe aucun assemblage entre la paroi médiane et les parois de cellule, les parois des cellules des deux côtés de la paroi médiane sont fixées en tant qu'ensemble à certaines cellules sur la paroi médiane et les parois des cellules sont constituées de deux parties (306, 307) qui sont réalisées en une seule pièce, par exemple par injection, dont la partie (306) voisine de la paroi médiane s'élargit légèrement, coniquement en allant du fond de cellule (314) vers l'extérieur et la partie extérieure (307) se rétrécit coniquement fortement vers l'extérieur.

Fig.1

Fig.2

Fig.3

Fig.4

Fig. 5

Fig. 6

Fig. 7

Fig 8